# EUROPEAN PATENT SPECIFICATION

(11) **EP 4 185 911 B1**
(45) Date of publication and mention of the grant of the patent: **28.10.2026**
(21) Application number: 21847205.8
(22) Date of filing: 14.07.2021
(51) Int. Cl.: G02B 6/44, G02B 6/04, G02B 6/36, G02B 6/40

(54) **OPTICAL CABLE WITH ROUTABLE FIBER CARRYING SUBUNIT**
OPTISCHES KABEL MIT EINER AUSSCHWENKBAREN FASERUNTEREINHEIT
CÂBLE OPTIQUE AVEC SOUS-UNITÉ DE TRANSPORT DE FIBRE POUVANT ÊTRE ACHEMINÉE

(30) Priority: 22.07.2020 US 202063054861 P
(43) Date of publication of application: 31.05.2023
(73) Proprietor: Corning Research & Development Corporation, Corning, New York 14831 (US)
(72) Inventor: BUSHNELL, Mark Hanson, Hickory, North Carolina 28602 (US); HUDSON, II, Harold Edward, Conover, North Carolina 28613 (US); NICHOLSON, Wesley Brian, Hickory, North Carolina 28602 (US)
(74) Representative: Sturm, Christoph
(86) International application number: PCT/US2021/041517
(87) International publication number: WO 2022/020144

(56) References cited:
- US-A1- 2008 212 827
- US-A1- 2012 244 305
- US-A1- 2012 257 864
- US-A1- 2013 022 325
- US-A1- 2014 196 631
- US-A1- 2017 192 189
- US-A1- 2019 002 677
- US-A1- 2019 071 562
- US-A1- 2019 361 185
- US-B1- 6 215 931

## Description

### CROSS-REFERENCE TO RELATED APPLICATIONS

This application claims the benefit of priority to U.S. Provisional Application Serial No. 63/054,861 filed on July 22, 2020.

### BACKGROUND

The present invention is related to optical fiber cables with subunits and more particularly to optical fiber carrying subunits having jackets with improved mechanical properties. Optical fiber cables are used to transmit data over distance. Generally, large distribution cables that carry a multitude of optical fibers from a hub are sub-divided at network nodes into routable subunits. Described herein are jackets for routable subunits in which the jacket provides adequate flexibility, robustness, and safety features, among other qualities.

US 2017/192189 A1 discloses an optical fiber cable showing the features of the preamble of claim 1 and showing the features of the preamble of claim 9. US 2019/071562 A1 and US 2019/361185 A1 show additional prior art.

### SUMMARY

The invention provides an optical fiber cable according to claim 1.

The invention provides an optical fiber cable according to claim 9.

Additional features and advantages will be set forth in the detailed description that follows, and in part will be readily apparent to those skilled in the art from the description or recognized by practicing the embodiments as described in the written description and claims hereof, as well as the appended drawings.

It is to be understood that both the foregoing general description and the following detailed description are merely exemplary, and are intended to provide an overview or framework to understand the nature and character of the claims.

The accompanying drawings are included to provide a further understanding and are incorporated in and constitute a part of this specification. The drawings illustrate one or more embodiment(s), and together with the description serve to explain principles and the operation of the various embodiments.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 depicts an optical fiber ribbon cable, according to an exemplary embodiment;
FIG. 2 depicts a cross-sectional of the optical fiber ribbon cable of FIG. 1, according to an exemplary embodiment;
FIG. 3 depicts a perspective view an optical fiber carrying subunit of FIG. 1, according to an exemplary embodiment;
FIG. 4 depicts a graph showing the storage modulus for various subunit jacket materials, according to exemplary embodiments;
FIG. 5 is a cross-section image of an optical fiber ribbon cable, according to an exemplary embodiment;
FIG. 6 is a cross-section image of an optical fiber ribbon cable, according to an exemplary embodiment; and
FIG. 7 is a method of manufacturing one or more ribbon cables, according to an exemplary method.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

### DETAILED DESCRIPTION

Referring generally to the figures, various embodiments of an optical fiber cable including subunits are shown. The subunit jackets discussed herein are formed from materials that provide a unique and difficult to achieve set of properties including, high burn resistance, low smoke production, flexibility, improved manufacturability and/or low thickness, that Applicant believes is not previously achieved in optical fiber subunit designs. Computer data center operators require increasingly high fiber density optical cables in order to meet their capacity needs while not overcrowding the trays used to run cables throughout the data center. To address this issue, Applicant has developed cables that use routable subunits. However, Applicant has found it difficult to obtain subunits with jackets that tolerate a high draw and thin wall manufacturing process, adhere to certain safety regulations (e.g., fire safety regulations) , are sufficiently flexible, and do not exhibit unacceptable signal attenuation. Applicant has developed a variety of optical fiber cables with subunit jackets that are robust over a wide range of temperatures, flexible enough at room temperature to serve as a furcation leg, and can be used as a component in large stranded cables such as the 6912 IO cable without negatively impacting signal attenuation, all while achieving burn performance to satisfy various safety regulations.

The subunit jackets described herein provide several advantages over previous subunits. By eliminating the need to furcate the ribbons, workers installing the cables will be able to save significant time and labor. The improved flexibility at room temperatures, and colder, also reduces the likelihood of subunit jackets cracking when routing the subunits into an enclosure or splice cabinet in the field, and the adherence to safety regulations is requiring Applicant to use materials that are not typically used for as subunit jackets. The embodiments described herein allow for a wide range of installation and operation temperatures and reduce the likelihood of failures by allowing for the subunits and the ribbons within them to more easily move to low stress positions.

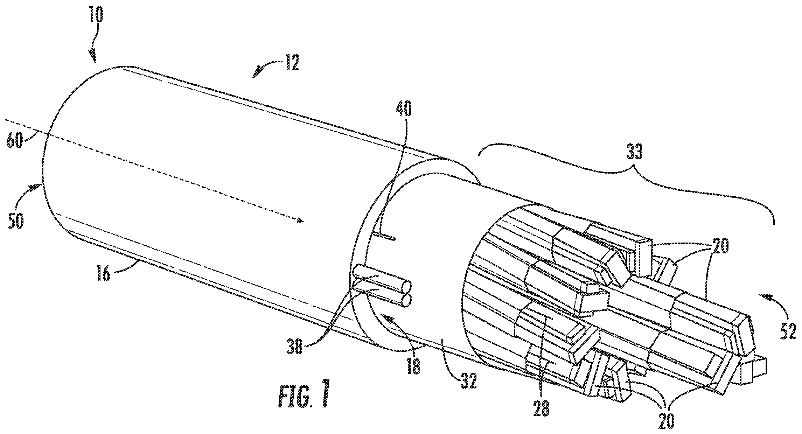

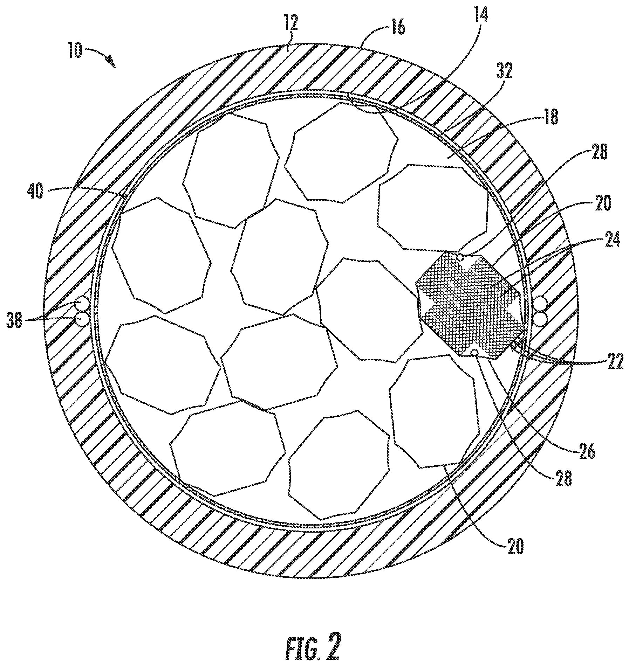

FIG. 1 and FIG. 2 depict an optical fiber cable, shown as ribbon cable 10, according to an exemplary embodiment. The ribbon cable 10 includes a cable jacket 12 having an inner surface 14 and an outer surface 16. The inner surface 14 defines a central bore 18, and the outer surface 16 defines an outermost extent of the ribbon cable 10. In embodiments, the outer surface 16 defines an outer diameter of the ribbon cable 10 from 20 mm to 40 mm. While the term "diameter" is used, the outer surface 16 may not define a circle, and in such instances, "diameter" refers to the largest cross-sectional outer dimension of the ribbon cable 10. Further, in embodiments, the inner surface 14 and the outer surface 16 define a thickness of the cable jacket 12 from 1 mm to 10 mm, more particularly from 2 mm to 5 mm.

Disposed within the central bore 18 are a plurality of subunits 20. In various embodiments, the subunits 20 are helically wound (e.g., wound around each other, wound around one or more central strength element), which facilitates bending and coiling of the ribbon cable 10, e.g., enhancing the routability of the ribbon cable 10.

Referring to FIG. 2, one subunit 20 is shown in detail, while the remaining subunits 20 are shown schematically. As can be seen, the subunit 20 includes a plurality of ribbons 22. Each ribbon 22 includes a plurality of optical fibers 24 in a planar configuration. The optical fibers 24 may be held in the planar configuration using a ribbon matrix material.

The cable jacket 12 includes a plurality of strengthening members, shown as strengthening yarns 38, contained within the material of the cable jacket 12 between the inner surface 14 and the outer surface 16. In an embodiment, the ribbon cable 10 includes four strengthening yarns 38 disposed within the cable jacket 12 in two pairs that are equidistantly spaced around the cable jacket 12. In embodiments, the strengthening yarns 38 are textile yarns. Exemplary textile yarns suitable for use as the strengthening yarns include at least one of glass fibers, aramid fibers, cotton fibers, or carbon fibers, among others.

In various embodiments, jacket 12 is formed from a polymer material and in specific embodiments is formed from a polyolefin material. Exemplary polyolefins suitable for use in the jacket 12 include one or more of medium-density polyethylene (MDPE), high-density polyethylene (HDPE), low-density polyethylene (LDPE), linear low-density polyethylene (LLDPE), and/or polypropylene (PP), amongst others. Exemplary thermoplastic elastomers suitable for use in the jacket 12 include one or more of ethylene-propylene rubber (EPR), ethylene-propylene-diene rubber (EPDM), ethylene-octene (EO), ethylene-hexene (EH), ethylene-butene (EB), ethylene-vinyl acetate (EVA), and/or styrene-ethylene-butadienestyrene (SEBS), amongst others.

In various embodiments, the cable jacket 12 includes an access feature 40, such as a ripcord or strip of polymer material that is dissimilar from the material of the cable jacket 12 (e.g., polypropylene strip in a predominantly polyethylene jacket). In embodiments, the ripcord is a yarn that includes at least one of a textile fiber (such as those listed above), liquid crystal polymer fibers, or PET polyester fibers, among others. In one embodiment, the ribbon cable 10 includes two access features 40 that are arranged diametrically within the cable jacket 12. In other embodiments, the ribbon cable 10 may include a single access feature 40 or more than two access features 40, such as up to four access features 40. The access features 40 may be positioned such that strengthening yarns 38 are evenly spaced around the access feature 40.

In the embodiment depicted in FIG. 1, a water barrier layer 32 is located within jacket 12 and surrounds subunits 20. Water barrier layer 32 absorbs water which in turn prevents or limits water from traveling along cable 10 and/or from contacting the subunits 20. In embodiments, the water barrier layer 32 is a water-blocking tape, e.g., that absorbs water and/or swells when contacted with water. In other embodiments, the water barrier layer 32 is an SAP powder applied to the exterior of the subunits 20 and/or the inner surface 14 of the cable jacket 12. As used herein, all of the components from the water barrier layer 32 inward are referred to as the cable core 33.

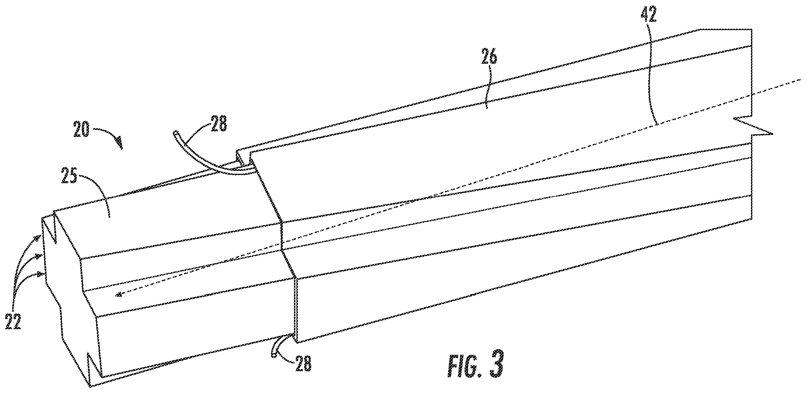

FIG. 3 depicts an embodiment of optical fiber subunit, shown as a subunit 20. Subunit 20 includes jacket 26 surrounding a plurality of optical fibers, shown as optical fibers 24. In specific embodiments, each subunit includes one or more access features, shown as rip cords 28. Rip cords 28 are arranged at different locations within jacket 26, such as being diametrically opposed to each other. In another embodiment, two or more rip cords 28 are located at the same and/or nearly the same location (e.g., such that the two or more rip cords 28 at the same location interface against each other along the length of jacket 26).

In various embodiments, jacket 26 includes a first polymer composition comprising a low smoke, zero halogen (LSZH) material. In a specific embodiment, the first polymer composition that forms jacket 26 has a storage modulus of no more than 500 MPa at room temperature (e.g., about 20 °C) and no more than 4000 MPa at -20 (negative twenty) °C, or more specifically no more than 200 MPa at room temperature and no more than 2000 MPa at - 20 (negative twenty) °C. In one embodiment, subunit jacket has a thickness between 0.15 mm and 0.45 mm, and more specifically between 0.2 mm and 0.35 mm. Applicant has determined that most low smoke, zero halogen materials that are too brittle and inflexible to provide easy to use, routable subunits. However, Applicant has identified LSZH materials with these storage modulus ranges and/or thickness ranges, allows for use of LSZH materials while still providing for a routable subunit that is resistant to cracking.

In embodiments, the subunit jacket 26 comprises a low smoke, zero halogen (LSZH) and/or flame retardant, non-corrosive (FRNC) composition. In certain embodiments, the subunit jacket 26 is comprised of a flame retardant additive dispersed, mixed, or otherwise distributed in a polymeric resin. In embodiments, the polymeric resin is a thermoplastic, and in a more specific embodiment, the thermoplastic is a polyolefin-based resin. Polymer resins that may be used for the subunit jacket 26 include a single polymer or a blend of polymers selected from the following non-limiting list: ethylene-vinyl acetate copolymers, ethylene-acrylate copolymers, ethylene homopolymers (including but not limited to low density, medium density, and high density), linear low density polyethylene, very low density polyethylene, polyolefin elastomer copolymer, propylene homopolymer, polyethylene-polypropylene copolymer, butene- and octene branched copolymers, polyester copolymers, polyethylene terephthalates, polybutylene therephthalates, other polymeric terephthalates, and maleic anhydride-grafted versions of the polymers listed herein. In embodiments, the subunit jacket 26 includes at least one flame retardant additive. Exemplary flame retardant additives include aluminum trihydrate (ATH), magnesium hydroxide (MDH), ammonium polyphosphate (APP), pentaerythritol (PER), antimony oxides, zinc borates, boehmite, intumescent materials, and red phosphorous, among others.

In various embodiments, the subunit jacket 26 is formed from a first polymer material, and jacket 12 of cable 10 is formed from a different material. In one such embodiment, subunit jacket 26 is formed from a first LSZH halogen material, and jacket 12 is formed from a different LSZH halogen material.

In a specific embodiment, subunit jacket 26 has a limiting oxygen index (LOI) of 25 or greater (as measured according to ASTM D 2863 A) and/or a Peak Heat Release Rate (PHRR) of 300 kW/m² or less. In a more specific embodiment, subunit jacket 26 has an LOI of 30 or more and/or a PHRR of 250 kW/m² or less.

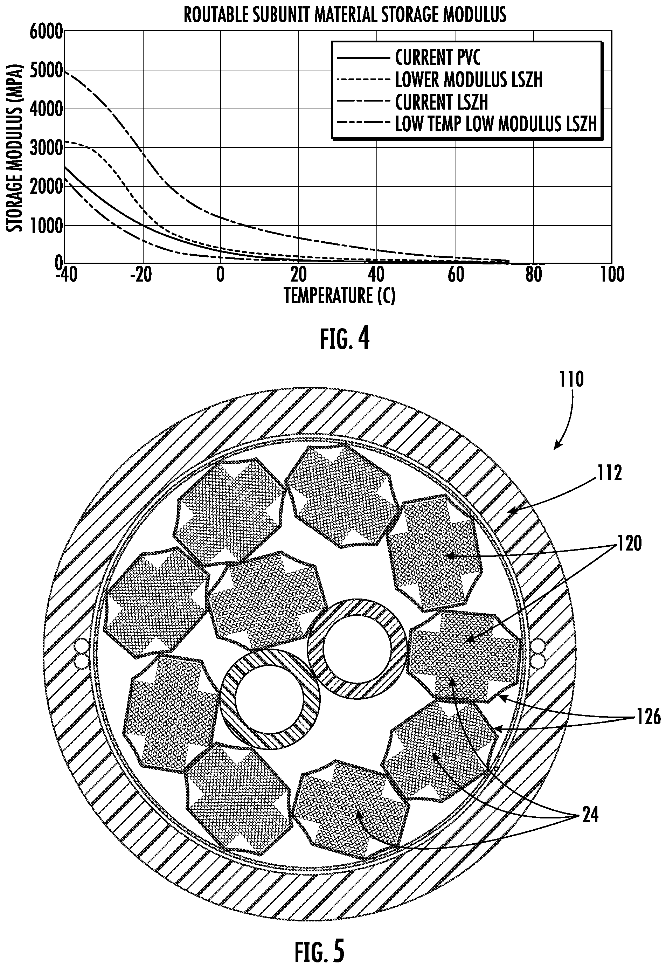

Referring to FIG. 4, a graph showing the storage modulus of various potential subunit jacket materials vs. temperature are show. The plot labeled "Low temp low modulus LSZH" illustrates the storage modulus of a specific LSZH material that Applicant has identified as being particularly suitable for subunit jacket 26. The plot labeled "Lower modulus LSZH" illustrates the storage modulus of another specific LSZH material that Applicant has identified as being particularly suitable for subunit jacket 26. As shown in FIG. 4, both the Low temp low modulus LSZH material and the Lower modulus LSZH have storage moduli over the temperature similar to PVC while providing the benefits of a LSZH material. Further, as compared to the "Current LSZH" material, both the Low temp low modulus LSZH material and the Lower modulus LSZH have much lower storage moduli representing the better flexibility and routability provided by these materials.

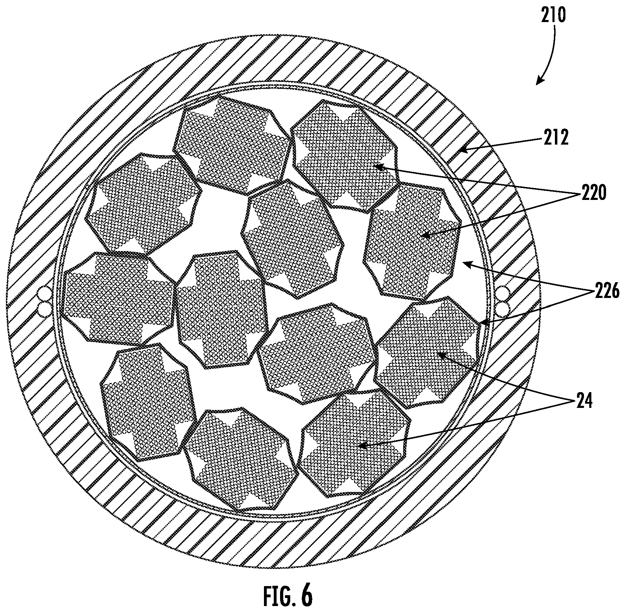

Referring to FIG. 5 and FIG. 6, ribbon cable 110 and ribbon cable 210 are shown, respectively, according to exemplary embodiments. Ribbon cable 110 and ribbon cable 210 are substantially the same as ribbon cable 10, except for the differences discussed herein. In general, FIG. 5 and FIG. 6 depict the effect of the level of air pressure/vacuum and different materials within the subunit jackets on subunit jacket structure and performance.

Referring to FIG. 5, ribbon cable 110 includes jacket 112 defining a central core in which subunits 120 are located. Subunits 120 include subunit jackets 126, which are formed from a polyvinylchloride (PVC) material around optical fibers 24. In FIG. 5, subunit jacket 126 was formed around optical fibers 24 with reduced air pressure (e.g., a vacuum) within subunit jacket 126 (e.g., in the region between subunit jacket 126 and optical fibers 24). In FIG. 6, ribbon cable 210 includes jacket 212 defining a central core in which subunits 220 are located. Subunits 220 include subunit jackets 226, which are formed around optical fibers 24 from the material identified as "Current LSZH" in FIG. 4. In FIG. 6, subunit jacket 226 was formed around optical fibers 24 with ambient atmospheric air pressure between subunit jacket 126 and optical fibers 24. As a result, subunit jacket 226 in FIG. 6 is less tightly formed around optical fibers 24 than subunit jacket 126 in FIG. 5.

Referring to Table 1 below, a table demonstrating the effect of the level of air pressure within a subunit jacket on signal attenuation is shown.

| Vacuum Setpoint | Average attenuation |
|---|---|
| No vacuum | 0.33 db/km |
| Vacuum on | 0.65 db/km |
| Air Insertion | 0.4 db/km |

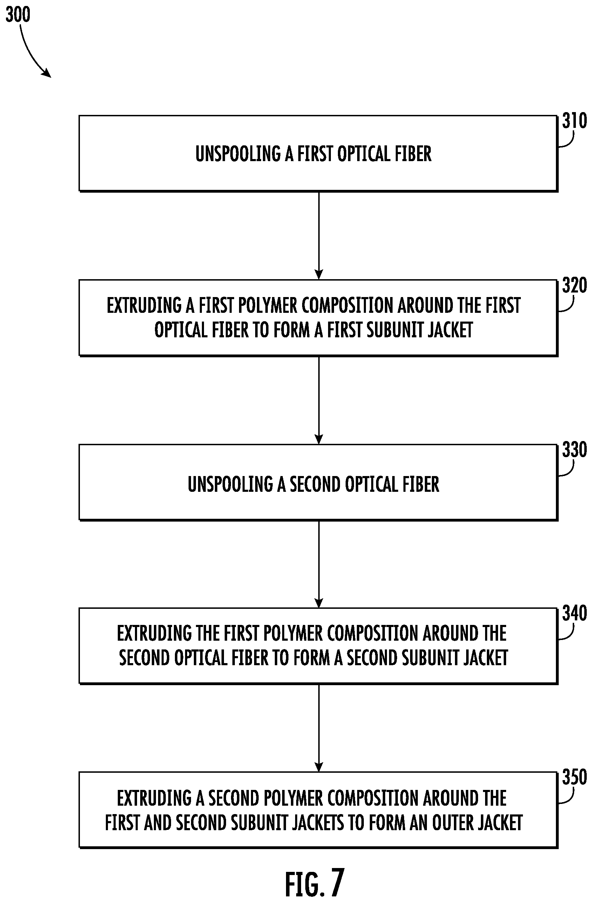

As shown in Table 1, Applicant has observed that creating a vacuum or increasing pressure between the subunit jacket and the optical fibers while forming the subunit jacket may negatively affect the signal attenuation of the subunit. As indicated in FIG. 7, when the subunit jacket is formed around a plurality of optical fibers with unaltered atmospheric pressure (e.g., within 5% of one atmosphere) between the subunit jacket and the optical fibers, the signal attenuation of the subunit is 0.33 db/km. When the subunit jacket is formed around a plurality of optical fibers with a vacuum created between the subunit jacket and the optical fibers, the signal attenuation of the subunit is 0.65 db/km. When the subunit jacket is formed around a plurality of optical fibers while air is inserted between the subunit jacket and the optical fibers, the signal attenuation of the subunit is 0.4 db/km. Applicant has observed there is a balance between providing sufficient mobility for the ribbons to relieve stress while providing enough restraint to prevent the ribbons from moving significantly out of the stack, which may also result in attenuation.

Referring to FIG. 7, a method 300 of forming an optical cable, such as optical ribbon cable 10 is shown. The method is not part of the claimed invention. According to one method of producing cable 10, a first optical fiber 24 is unspooled from a spool (step 310). A first polymer composition is extruded to form a first subunit jacket 26 around the optical fibers 24 (step 320). A second optical fiber 24 is unspooled from a spool (step 330), and the first polymer composition is extruded to form a second subunit jacket 26 around the second optical fiber 24 (step 340). A second polymer composition is extruded around the first subunit jacket 26 and the second subunit jacket 26 to form an outer jacket. In a specific embodiment, subunit jacket 26 has a drawdown ratio of 4 or less, and more specifically subunit jacket 26 has a drawdown ratio of 3.5 or less, and more specifically subunit jacket 26 has a drawdown ratio less than 2.0, and even more specifically has a drawdown ratio of around 1.5. Described another way, subunit jacket 26 has an elongation break point of at least 140% at room temperature (as measured according to IEC 811-1-1).

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that any particular order be inferred. In addition, as used herein, the article "a" is intended to include one or more than one component or element, and is not intended to be construed as meaning only one.

## Claims

1. An optical fiber cable (10; 110; 210) comprising:
an outer jacket (12; 112; 212) comprising a first inner surface (14) and a first outer surface (16) defining an outermost surface of the optical fiber cable (10; 110; 210), the first inner surface (14) defining a central bore (18; 118; 218) extending in a longitudinal direction between first and second ends of the outer jacket (12; 112; 212);
a plurality of optical fiber carrying subunits (20; 120; 220) located within the central bore (18), each of the plurality of optical fiber carrying subunits (20, 120; 220) comprising:
a subunit jacket (26; 126; 226) located within the central bore (18), the subunit jacket (26; 126; 226) comprising a second inner surface and a second outer surface, the second inner surface defining an inner bore extending in a longitudinal direction between first and second ends of the subunit jacket (26; 126; 226), wherein the subunit jacket (26; 126; 226) comprises a first polymer composition comprising a low smoke, zero halogen material; and
a plurality of optical fibers (24) located within the inner bore and extending in the longitudinal direction between the first and second ends of the subunit jacket (26; 126; 226),
**characterized in that** the low smoke, zero halogen material comprises an elongation at break coefficient of at least 140%.

2. The optical fiber cable (10; 110; 210) of claim 1, wherein the first polymer composition has a storage modulus of less than 4000 MPa at -20 (negative twenty) degrees Celsius.

3. The optical fiber cable (10; 110; 210) of claim 1, wherein the first polymer composition has a storage modulus of less than 500 MPa at 20 degrees Celsius.

4. The optical fiber cable (10; 110; 210) of claim 1, wherein the first polymer composition has a limiting oxygen index (LOI) of 30 or greater.

5. The optical fiber cable (10; 110; 210) of claim 1, wherein the first polymer composition has a peak heat release rate (PHRR) of 250 kW/m² or less.

6. The optical fiber cable (10; 110; 210) of claim 1, wherein the subunit jacket (26; 126; 226) comprises a thickness between 0.20 mm and 0.35 mm.

7. The optical fiber cable (10; 110; 210) of claim 1, wherein the first polymer composition has a storage modulus of less than 1000 MPa at 20 degrees Celsius, less than 2000 MPa at 0 degrees Celsius, and less than 4000 MPa at -20 (negative twenty) degrees Celsius.

8. The optical fiber cable (10; 110; 210) of claim 1, wherein the outer jacket (12; 112; 212) comprises a second polymer composition that is different than the first polymer composition of the subunit jacket (26; 126; 226).

9. An optical fiber cable (10; 110; 210) comprising:
an outer jacket (12; 112; 212) comprising a first inner surface (14) and a first outer surface (16) defining an outermost surface of the optical fiber cable (10; 110; 210), the first inner surface (14) defining a central bore (18) extending in a longitudinal direction between first and second ends of the outer jacket (12; 112; 212);
a plurality of optical fiber carrying subunits (20; 120; 220) located within the central bore (18), each of the plurality of optical fiber carrying subunits (20; 120; 220) comprising:
a subunit jacket (26; 126; 226) located within the central bore (18), the subunit jacket (26; 126; 226) comprising a second inner surface and a second outer surface, the second inner surface defining an inner bore extending in a longitudinal direction between first and second ends of the subunit jacket (26; 126; 226), wherein the subunit jacket (26; 126; 226) comprises a first polymer composition comprising a low smoke, zero halogen material; and
a plurality of optical fibers (24) located within the inner bore and extending in the longitudinal direction between the first and second ends of the subunit jacket (26; 126; 226)
**characterized in that** the low smoke, zero halogen material has a storage modulus of no more than 2000 MPa at -20 (negative twenty) degrees Celsius.

10. The optical fiber cable (10; 110; 210) of claim 9, wherein the subunit jacket (26; 126; 226) comprises a thickness between 0.20 mm and 0.35 mm.

11. The optical fiber cable (10; 110; 210) of claim 9, wherein the outer jacket (12; 112; 212) comprises a second polymer composition that is different than the first polymer composition of the subunit jacket (26; 126; 226).

12. The optical fiber cable (10; 110; 210) of claim 9, wherein the first polymer composition has a storage modulus less than 200 MPa at 20 degrees Celsius.

13. The optical fiber cable (10; 110; 210) of claim 9, wherein the first polymer composition has a limiting oxygen index (LOI) of 25 or greater.

14. The optical fiber cable (10; 110; 210) of claim 9, wherein the first polymer composition has a peak heat release rate (PHRR) of 300 kW/m² or less.

15. The optical fiber cable (10; 110; 210) of claim 9, wherein the first polymer composition has a storage modulus less than 1000 MPa at -20 (negative twenty) degrees Celsius.

## Patentansprüche

1. Lichtleiterfaserkabel (10, 110, 210), das Folgendes aufweist:
einen Außenmantel (12; 112; 212), der eine erste Innenfläche (14) und eine erste Außenfläche (16) aufweist, die eine äußerste Oberfläche des Lichtleiterfaserkabels (10; 110; 210) definiert, wobei die erste Innenfläche (14) eine zentrale Bohrung (18; 118; 218) definiert, die sich in einer Längsrichtung zwischen einem ersten Ende und einem zweiten Ende des Außenmantels (12; 112; 212) erstreckt;
mehrere Lichtleiterfaser-Trägeruntereinheiten (20; 120; 220), die sich innerhalb der zentralen Bohrung (18) befinden, wobei jede der mehreren Lichtleiterfaser-Trägeruntereinheiten (20, 120; 220) Folgendes aufweist:
einen Untereinheitsmantel (26; 126; 226), der sich innerhalb der zentralen Bohrung (18) befindet, wobei der Untereinheitsmantel (26; 126; 226) eine zweite Innenfläche und eine zweite Außenfläche ausweist, wobei die zweite Innenfläche eine Innenbohrung definiert, die sich in einer Längsrichtung zwischen einem ersten und einem zweiten Ende des Untereinheitsmantels (26; 126; 226) erstreckt, wobei der Untereinheitsmantel (26; 126; 226) eine erste Polymerzusammensetzung aufweist, die ein raucharmes, halogenfreies Material aufweist; und
mehrere Lichtleiterfasern (24), die sich innerhalb der Innenbohrung befinden und sich in der Längsrichtung zwischen dem ersten und dem zweiten Ende des Untereinheitsmantels (26; 126; 226) erstrecken,
**dadurch gekennzeichnet, dass** das raucharme, halogenfreie Material einen Bruchdehnungskoeffizienten von mindestens 140 % aufweist.

2. Lichtleiterfaserkabel (10; 110; 210) nach Anspruch 1, wobei die erste Polymerzusammensetzung einen Speichermodul von weniger als 4000 MPa bei -20 (minus zwanzig) Grad Celsius aufweist.

3. Lichtleiterfaserkabel (10; 110; 210) nach Anspruch 1, wobei die erste Polymerzusammensetzung einen Speichermodul von weniger als 500 MPa bei 20 Grad Celsius aufweist.

4. Lichtleiterfaserkabel (10; 110; 210) nach Anspruch 1, wobei die erste Polymerzusammensetzung einen limitierenden Sauerstoffindex (LOI) von 30 oder mehr aufweist.

5. Lichtleiterfaserkabel (10; 110; 210) nach Anspruch 1, wobei die erste Polymerzusammensetzung eine Spitzenwärmefreisetzungsrate (PHRR) von 250 kW/m² oder weniger aufweist.

6. Lichtleiterfaserkabel (10; 110; 210) nach Anspruch 1, wobei der Untereinheitsmantel (26; 126; 226) eine Dicke zwischen 0,20 mm und 0,35 mm aufweist.

7. Lichtleiterfaserkabel (10; 110; 210) nach Anspruch 1, wobei die erste Polymerzusammensetzung einen Speichermodul von weniger als 1000 MPa bei 20 Grad Celsius, weniger als 2000 MPa bei 0 Grad Celsius und weniger als 4000 MPa bei -20 (minus zwanzig) Grad Celsius aufweist.

8. Lichtleiterfaserkabel (10; 110; 210) nach Anspruch 1, wobei der Außenmantel (12; 112; 212) eine zweite Polymerzusammensetzung aufweist, die sich von der ersten Polymerzusammensetzung des Untereinheitsmantels (26; 126; 226) unterscheidet.

9. Lichtleiterfaserkabel (10, 110, 210), das Folgendes aufweist:
einen Außenmantel (12; 112; 212), der eine erste Innenfläche (14) und eine erste Außenfläche (16) aufweist, die eine äußerste Oberfläche des Lichtleiterfaserkabels (10; 110; 210) definiert, wobei die erste Innenfläche (14) eine zentrale Bohrung (18) definiert, die sich in einer Längsrichtung zwischen einem ersten Ende und einem zweiten Ende des Außenmantels (12; 112; 212) erstreckt;
mehrere Lichtleiterfaser-Trägeruntereinheiten (20; 120; 220), die sich innerhalb der zentralen Bohrung (18) befinden, wobei jede der mehreren Lichtleiterfaser-Trägeruntereinheiten (20; 120; 220) Folgendes aufweist:
einen Untereinheitsmantel (26; 126; 226), der sich innerhalb der zentralen Bohrung (18) befindet, wobei der Untereinheitsmantel (26; 126; 226) eine zweite Innenfläche und eine zweite Außenfläche ausweist, wobei die zweite Innenfläche eine Innenbohrung definiert, die sich in einer Längsrichtung zwischen einem ersten und einem zweiten Ende des Untereinheitsmantels (26; 126; 226) erstreckt, wobei der Untereinheitsmantel (26; 126; 226) eine erste Polymerzusammensetzung aufweist, die ein raucharmes, halogenfreies Material aufweist; und
mehrere Lichtleiterfasern (24), die sich innerhalb der Innenbohrung befinden und sich in der Längsrichtung zwischen dem ersten und dem zweiten Ende des Untereinheitsmantels (26; 126; 226) erstrecken,
**dadurch gekennzeichnet, dass** das raucharme, halogenfreie Material einen Speichermodul von nicht mehr als 2000 MPa bei -20 (minus zwanzig) Grad Celsius aufweist.

10. Lichtleiterfaserkabel (10; 110; 210) nach Anspruch 9, wobei der Untereinheitsmantel (26; 126; 226) eine Dicke zwischen 0,20 mm und 0,35 mm aufweist.

11. Lichtleiterfaserkabel (10; 110; 210) nach Anspruch 9, wobei der Außenmantel (12; 112; 212) eine zweite Polymerzusammensetzung aufweist, die sich von der ersten Polymerzusammensetzung des Untereinheitsmantels (26; 126; 226) unterscheidet.

12. Lichtleiterfaserkabel (10; 110; 210) nach Anspruch 9, wobei die erste Polymerzusammensetzung einen Speichermodul von weniger als 200 MPa bei 20 Grad Celsius aufweist.

13. Lichtleiterfaserkabel (10; 110; 210) nach Anspruch 9, wobei die erste Polymerzusammensetzung einen limitierenden Sauerstoffindex (LOI) von 25 oder mehr aufweist.

14. Lichtleiterfaserkabel (10; 110; 210) nach Anspruch 9, wobei die erste Polymerzusammensetzung eine Spitzenwärmefreisetzungsrate (PHRR) von 300 kW/m² oder weniger aufweist.

15. Lichtleiterfaserkabel (10; 110; 210) nach Anspruch 9, wobei die erste Polymerzusammensetzung einen Speichermodul von weniger als 1000 MPa bei -20 (minus zwanzig) Grad Celsius aufweist.

## Revendications

1. Câble à fibre optique (10 ; 110 ; 210) comprenant :
une gaine externe (12 ; 112 ; 212) comprenant une première surface interne (14) et une première surface externe (16) définissant une surface extérieure du câble à fibre optique (10 ; 110 ; 210), la première surface interne (14) définissant un alésage central (18 ; 118 ; 218) s'étendant dans une direction longitudinale entre une première et une deuxième extrémité de la gaine externe (12 ; 112 ; 212) ;
une pluralité de sous-unités porteuses de fibre optique (20 ; 120 ; 220) situées à l'intérieur de l'alésage central (18), chaque sous-unité de la pluralité de sous-unités porteuses de fibre optique (20 ; 120 ; 220) comprenant :
une gaine de sous-unité (26 ; 126 ; 226) située à l'intérieur de l'alésage central (18), la gaine de sous-unité (26 ; 126 ; 226) comprenant une deuxième surface interne et une deuxième surface externe, la deuxième surface interne définissant un alésage interne s'étendant dans une direction longitudinale entre une première et une deuxième extrémité de la gaine de sous-unité (26 ; 126 ; 226), la gaine de sous-unité (26 ; 126 ; 226) comprenant une première composition polymère comprenant un matériau sans halogène à faible dégagement de fumée ; et
une pluralité de fibres optiques (24) situées à l'intérieur de l'alésage interne et s'étendant dans la direction longitudinale entre la première et la deuxième extrémité de la gaine de sous-unité (26 ; 126 ; 226),
**caractérisé en ce que** le matériau sans halogène à faible dégagement de fumée présente un coefficient d'allongement à la rupture d'au moins 140 %.

2. Câble à fibre optique (10 ; 110 ; 210) de la revendication 1, dans lequel la première composition polymère a un module de conservation inférieur à 4000 MPa à -20 (moins vingt) degrés Celsius.

3. Câble à fibre optique (10 ; 110 ; 210) de la revendication 1, dans lequel la première composition polymère a un module de conservation inférieur à 500 MPa à 20 degrés Celsius.

4. Câble à fibre optique (10 ; 110 ; 210) de la revendication 1, dans lequel la première composition polymère a un indice limite d'oxygène (LOI) de 30 ou plus.

5. Câble à fibre optique (10 ; 110 ; 210) de la revendication 1, dans lequel la première composition polymère a un taux de dégagement de chaleur maximal (PHRR) de 250 kW/m² ou moins.

6. Câble à fibre optique (10 ; 110 ; 210) de la revendication 1, dans lequel la gaine de sous-unité (26 ; 126 ; 226) possède une épaisseur comprise entre 0,20 mm et 0,35 mm.

7. Câble à fibre optique (10 ; 110 ; 210) de la revendication 1, dans lequel la première composition polymère a un module de conservation inférieur à 1000 MPa à 20 degrés Celsius, inférieur à 2000 MPa à 0 degré Celsius et inférieur à 4000 MPa à -20 (moins vingt) degrés Celsius.

8. Câble à fibre optique (10 ; 110 ; 210) de la revendication 1, dans lequel la gaine externe (12 ; 112 ; 212) comprend une deuxième composition polymère qui est différente de la première composition polymère de la gaine de sous-unité (26 ; 126 ; 226).

9. Câble à fibre optique (10 ; 110 ; 210) comprenant :
une gaine externe (12 ; 112 ; 212) comprenant une première surface interne (14) et une première surface externe (16) définissant une surface extérieure du câble à fibre optique (10 ; 110 ; 210), la première surface interne (14) définissant un alésage central (18) s'étendant dans une direction longitudinale entre une première et une deuxième extrémité de la gaine externe (12 ; 112 ; 212) ;
une pluralité de sous-unités porteuses de fibre optique (20 ; 120 ; 220) situées à l'intérieur de l'alésage central (18), chaque sous-unité de la pluralité de sous-unités porteuses de fibre optique (20 ; 120 ; 220) comprenant :
une gaine de sous-unité (26 ; 126 ; 226) située à l'intérieur de l'alésage central (18), la gaine de sous-unité (26 ; 126 ; 226) comprenant une deuxième surface interne et une deuxième surface externe, la deuxième surface interne définissant un alésage interne s'étendant dans une direction longitudinale entre une première et une deuxième extrémité de la gaine de sous-unité (26 ; 126 ; 226), la gaine de sous-unité (26 ; 126 ; 226) comprenant une première composition polymère comprenant un matériau sans halogène à faible dégagement de fumée ; et
une pluralité de fibres optiques (24) situées à l'intérieur de l'alésage interne et s'étendant dans la direction longitudinale entre la première et la deuxième extrémité de la gaine de sous-unité (26 ; 126 ; 226),
**caractérisé en ce que** le matériau sans halogène à faible dégagement de fumée a un module de conservation ne dépassant pas 2000 MPa à -20 (moins vingt) degrés Celsius.

10. Câble à fibre optique (10 ; 110 ; 210) de la revendication 9, dans lequel la gaine de sous-unité (26 ; 126 ; 226) possède une épaisseur comprise entre 0,20 mm et 0,35 mm.

11. Câble à fibre optique (10 ; 110 ; 210) de la revendication 9, dans lequel la gaine externe (12 ; 112 ; 212) comprend une deuxième composition polymère qui est différente de la première composition polymère de la gaine de sous-unité (26 ; 126 ; 226).

12. Câble à fibre optique (10 ; 110 ; 210) de la revendication 9, dans lequel la première composition polymère a un module de conservation inférieur à 200 MPa à 20 degrés Celsius.

13. Câble à fibre optique (10 ; 110 ; 210) de la revendication 9, dans lequel la première composition polymère a un indice limite d'oxygène (LOI) de 25 ou plus.

14. Câble à fibre optique (10 ; 110 ; 210) de la revendication 9, dans lequel la première composition polymère a un taux de dégagement de chaleur maximal (PHRR) de 300 kW/m² ou moins.

15. Câble à fibre optique (10 ; 110 ; 210) de la revendication 9, dans lequel la première composition polymère a un module de conservation inférieur à 1000 MPa à -20 (moins vingt) degrés Celsius.
